# EUROPEAN PATENT APPLICATION

(11) **EP 1 258 273 A2**
(43) Date of publication of application: **20.11.2002**
(21) Application number: 02009015.5
(22) Date of filing: 23.04.2002
(51) Int. Cl.: A63F 13/12

(54) **Instant messenger server and method for supporting on-line game and storage media having program source thereof**

(30) Priority: 25.04.2001 KR 2001022381
(71) Applicant: GRAVITY CO., LTD., Seoul (KR)
(72) Inventor: Kim, Hak-Kyu, Gangnam-gu, Seoul (KR)
(74) Representative: Dr. Weitzel & Partner

(57) **Abstract**

Disclosed is an instant messenger server and method for supporting on-line game, and storage medium having an instant messenger program source thereof. The instant messenger server supports for transferring messages between a player and an opponent player by a request from the main player logged in when an instant messenger program is loaded on a player's computer and the instant messenger program is executed. The instant messenger server includes at least one on-line game content, and supports for the on-line game to be executed automatically, and for the main player logged in to play the on-line game with the opponent player when the main player logged in retrieves opponent players to play with the on-line game, proposes opponent player matching with retrieved condition to play the on-line game, and receives an approval signal from the opponent player. The player can play the on-line game quickly by a very convenient method in which the player can search for the opponent player to play the on-line game together without using servers of commercial Internet PC facilities and lobby servers of other on-line games. Also, the player can easily trade in-game items by retrieving without visiting other website or message board related to games.

## Description

### BACKGROUND OF THE INVENTION

### 1. Field of the Invention

The present invention relates to an instant messenger server and method for supporting on-line game and storage medium having program source thereof, and more particularly, an instant messenger server and a method for supporting on-line game and storage medium having instant messenger program source thereof, the instant messenger program through which a player is able to retrieve other players waiting for playing on-line game, and to play on-line game when the player acquire the retrieved player's approval, and a game contents provider is able to advertise games supplied by the contents provider, or to charge for playing.

### 2. Description of the Related Art

As computers is popularized broadly, players playing computer games rather than video games have increased, therefore computer game industry has been developed. However, conventional Al (Artificial Intelligence) games attract users no more, a multi-player on-line game, in which players are influenced by other player's play patterns, has got users' attraction instead of Al games. However, the multi-player on-line game has a disadvantage that players have to play in the same place at the same time. An on-line game, in which players is able to play game after connecting a game server through the Internet regardless of players' location, has been developed to overcome the disadvantage. Hereinafter, the on-line game refers to both massive-multiplayer on-line game (MMO) and network support game.

However, when an awful lot of users simultaneously try to connect the game server, the game server cannot accommodate all the users, therefore, users have to wait long time to play the game.

Accordingly, on-line game service providers have built and provided game servers independently. However, enormous expense is required to build and maintain game servers, many on-line game service providers, which failed to convert the on-line game contents into pay-contents, stop on-line game service, and the quality of the service is lowered. Hereinafter, the pay-contents are contents that users or players have to pay to use the contents. The on-line game service providers, which provide pay-contents, each have different charging method, and cause the advent of similar many charging agencies, many users feel much inconvenience of payment due to many charging systems varying with contents.

Moreover, each of service providers has burdens of enormous expense for advertisement, and cannot attract end-users because advertisements by the service providers still depend on a traditional advertisement.

Players form separate communities in which players retrieve other players to play game together, exchange any idea such as but not limited to game content and in-game item acquired during game. Accordingly, a lot of communities with similar aim are generated. Most of these communities remain websites with poor contents in view of quantity and quality because the information for on-line games is decentralized into a lot of communities.

### SUMMARY OF THE INVENTION

Accordingly, the present invention is to solve the aforementioned problems of the conventional art, and it is a first object of the present invention to provide an instant messenger server which can solve technical and financial difficulties of the on-line game service providers, can supports for players to easily retrieve other players and to play game together by sharing member database of each on-line game service providers.

It is a second object of the present invention to provide a method for supporting on-line game through an instant messenger.

It is a third object of the present invention to provide a recorded medium saving a program for supporting an on-line game through an instant messenger.

To achieve the first object of the present invention, there is provided an instant messenger server for supporting on-line games, when an instant messenger program is loaded on a player's computer and the instant messenger program is executed, the instant messenger server supports for transferring messages between a player and an opponent player by a request from the main player logged in. The instant messenger server includes at least one on-line game content, and supports for the on-line game to be executed automatically, and for the main player logged in to play the on-line game with the opponent player when the main player logged in retrieves opponent players to play with the on-line game, proposes opponent player matching with retrieved condition to play the on-line game, and receives an approval signal from the opponent player.

To achieve the second object of the present invention, there is provided an on-line game supporting method for supporting a main player, who connects an on-line game server and requests for the on-line game, to play the requested on-line game, the on-line game supporting method comprising the steps of: 1) retrieving an opponent player matching with a retrieval condition and providing retrieval result to the main player when the main player inputs the retrieval condition for the opponent player to play with; and 2) transmitting a game-playing request signal to the opponent player matching with the retrieved condition, and supporting the main player and the opponent player to play the on-line game together when receiving an approval signal from the opponent player.

To achieve the third object of the present invention, there is provided a recorded medium saving a program for supporting an on-line game through an instant messenger, the program supports a main player, who connects an on-line game server and requests for the on-line game, to play the requested on-line game, and the program executing the steps of: A) retrieving an opponent player matching with a retrieval condition and providing retrieval result to the main player when the main player inputs the retrieval condition for the opponent player to play with; and B) transmitting a game-playing request signal to the opponent player matching with the retrieved condition, and supporting the main player and the opponent player to play the on-line game together when receiving an approval signal from the opponent player.

_ Hereinafter, the present invention provides a system, which comprises the instant messenger server for executing the instant messenger program and supporting the on-line game, the instant messenger server is coupled to a player computer installed with the instant messenger program, and game-content server through Internet.

In addition, the present invention comprises a computer system programmed for running a method for supporting the on-line game, and a product of the program as preferred embodiments of the present invention. According to another embodiment of the computer system, instruction sets of the program source, which is written so as to execute the method for supporting the on-line game, is resident on at least one memory (i.e. RAM), and the instruction sets can be saved in a recorded medium, for example a hard disc etc., until the computer system requires.

As described above, according to the present invention, the instant messenger server searches the opponent player of the on-line game and provides the searched opponent player by using the instant messenger program provided by the instant messenger server, therefore, the player is able to play the on-line game quickly by a very convenient method in which the player is able to search for the opponent player to play the on-line game together without using servers of commercial Internet PC facilities and lobby servers of other on-line games.

Further, according to the present invention, the player is able to easily trade in-game items, which the player wants to trade, by retrieving without visiting other website or message board related to games.

Further, according to the present invention, the operator that develops and provides the on-line game need not develop and construct another lobby server or login server for each content, therefore, the operator is able to reduce the cost for operating lobby servers or login servers because, and outstanding advertisement effects can be achieved only by registering on-line game contents in the instant messenger server.

Further, according to the present invention, the operator of the instant messenger server can take a lot of profit through commissions according to advertisement and payment for pay-content by cooperating with the providers that provide game contents or gift contents.

### BRIEF DESCRIPTION OF THE DRAWINGS

The above objects and other advantages of the present invention will become more apparent by describing in detail exemplary embodiments thereof with reference to the attached drawings in which:
FIG. 1 is a schematic diagram of a system, which includes an instant messenger server, for supporting an on-line game in accordance with one embodiment of the present invention.
FIG. 2 is a schematic view showing a login window of the instant messenger for supporting the on-line game in accordance with one embodiment of the present invention;
FIG. 3 is a schematic view showing a window displayed when the instant messenger is running in accordance with one embodiment of the present invention;
FIGS. 4A-4G is a schematic view showing a process for supporting the on-line game in accordance with one embodiment of the present invention; and
FIG. 5 is a flow chart illustrating a method for supporting the on-line game in accordance with one embodiment of the present invention.

### DETAILED DESCRIPTION OF THE PREFERRED EMBODIMENTS

Now, exemplary embodiments of the present invention will be described in detail with reference to the annexed drawings.

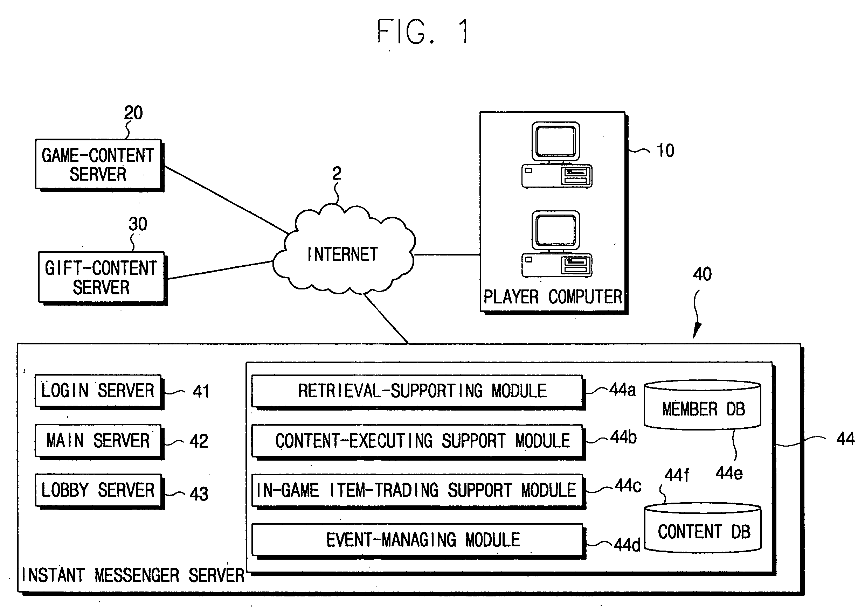

FIG. 1 is a schematic diagram of a system, which includes an instant messenger server, for supporting an on-line game in accordance with one embodiment of the present invention;

Referring to FIG. 1, the system is coupled to at least one player computer 10, and an instant messenger server 40, which supports for an on-line game through Internet 2.

The player computer 10 comprise any terminal device accessible to Internet, such as a personal computer (PC), a notebook etc. The terminal device should be loaded with an instant messenger driving program distributed from the instant messenger 40. The instant messenger driving program can be downloaded to the terminal device by connecting to the instant messenger server 40 or by connecting other web site.

The instant messenger server 40 distributes and manages the instant messenger driving program. The instant messenger server 40 comprises a login server 41 for judging whether a player trying to connect the instant messenger server 40 is a member, a main server 42 for transferring messages to both the player and an opponent player by the request of chatting from the login player, a lobby server 43 for managing members who belong to chatting groups or participate in chatting groups, and a database server 44.

The database server 44 supports the on-line game provided by the present invention. The database server 44 comprises a member database 44e, a content database 44f, a retrieval-supporting module 44a, and a content-executing support module 44b.

The member database 44e saves information of members, and the content database 44f saves the information of contents. The retrieval-supporting module 44a searches the member database 44e for the opponent player matching with a retrieval condition, and shows the searched for opponent player to the player when the player inputs the retrieval condition for the opponent player to play with. The content-executing support module 44b judges whether the on-line game program is installed in the player's computer and the opponent player's computer when a game-play control signal is received, and, if the on-line game program is not installed, automatically searches the content database 44f for a corresponding game program, and downloads the on-line game program into the player's or the opponent player's computer.

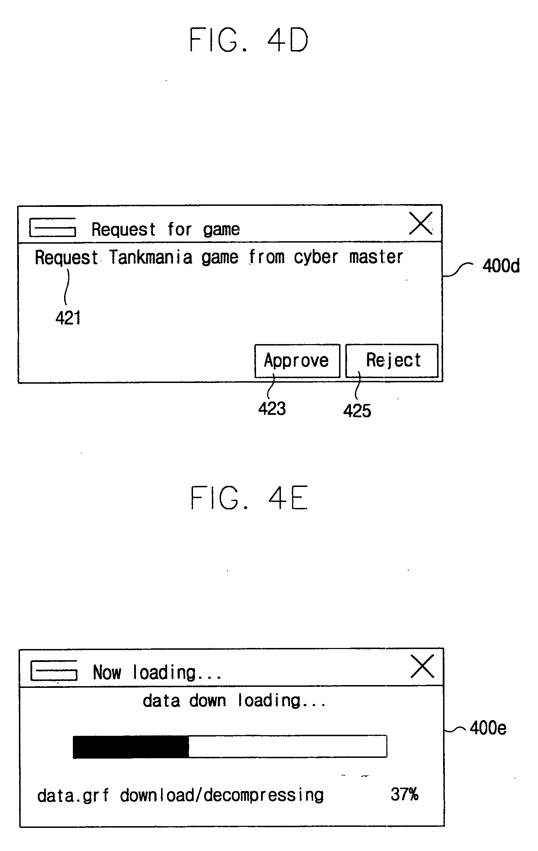

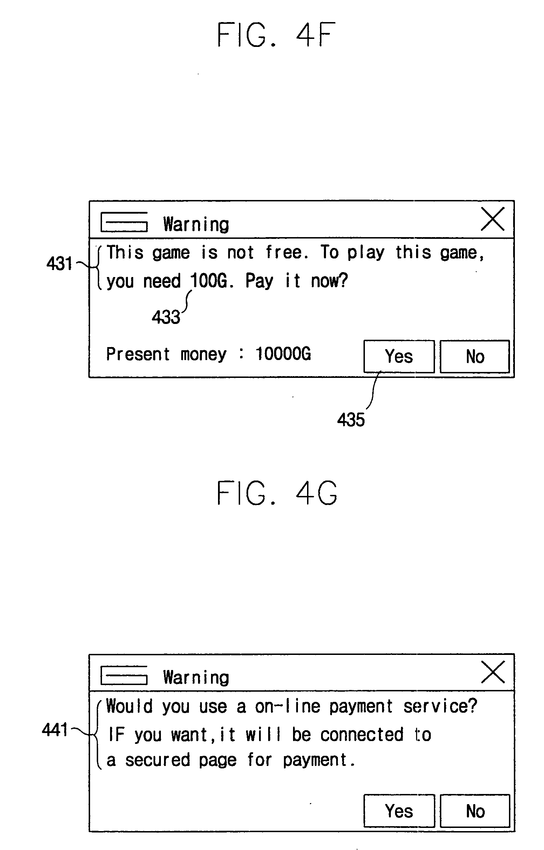

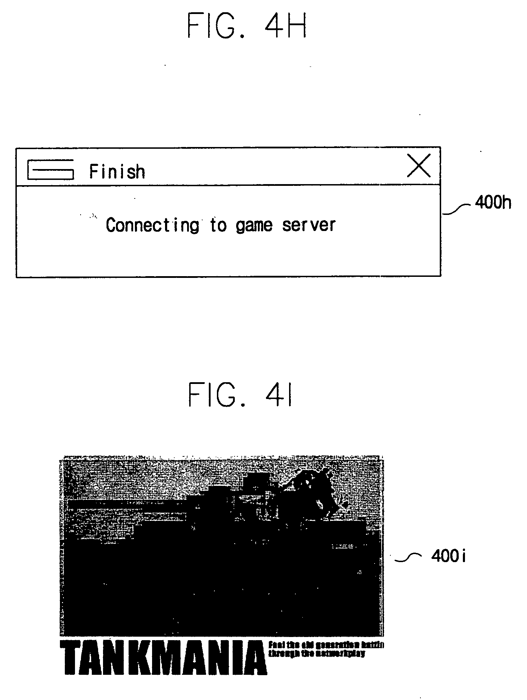

The content-executing support module 44b further comprises a pay-content payment support module(not shown). The pay-content payment supports module provides a pay-content information showing that the game content should be paid when the on-line game which the player and the opponent player want to play is the pay-content and the opponent player clicks an approval button (referring to FIG. 4D), and requests the player or the opponent player for the payment (referring to FIG. 4F).

Also, the database server 44 receives a event content from at least one gift-content server 30 and stores the event content into the content database 44f, and the database server 44 further comprises an in-game item-trading supporting module 44c for intermediating the trade of in-game item, and an event-managing module 44d for supporting for the player to be provided with a gift by a lottery when the player participates in an event of the event advertisement region included in a predetermined region of the instant messenger.

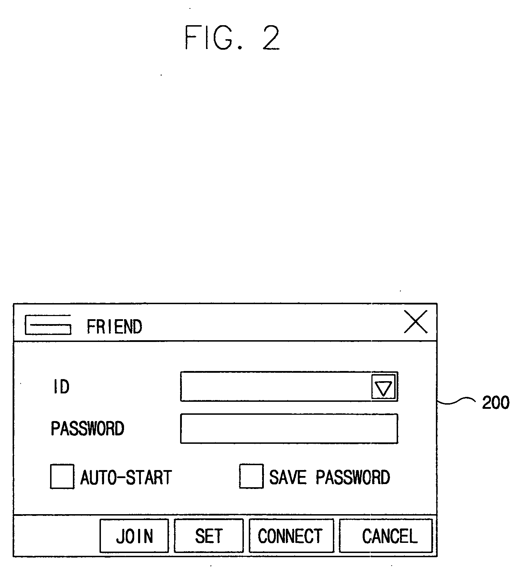

Hereinafter, referring to FIGS. 2-5, a process for supporting the on-line game by the instant messenger server 40 is illustrated.

Players have to register as members in the instant messenger server 40 and to acquire an ID and password in order to use instant messenger. A player registered as a member has to login in order to connect the instant messenger server 40 by running the instant messenger driving program. The login server 41 in the instant messenger server 40 judges whether players is a registered player when players try to login the instant messenger server 40.

Players registered as members in the instant messenger server 40 need not register again as members in the game-content server 20 providing the on-line game when executing the on-line game provided by the instant messenger server 40.

Information of players is saved in the member database 44e when the players register as members in the instant messenger server 40. The login server 41 judges whether the ID and password, which is inputted by players when players try to connect to the instant messenger server 40, is correct, and allows only the players who input correct ID and password to connect to the instant messenger server 40.

When a player executes the instant messenger driving program loaded in the player computer 10, as shown in FIG. 2, a window 200 to input an ID and password is displayed in the player computer 10.

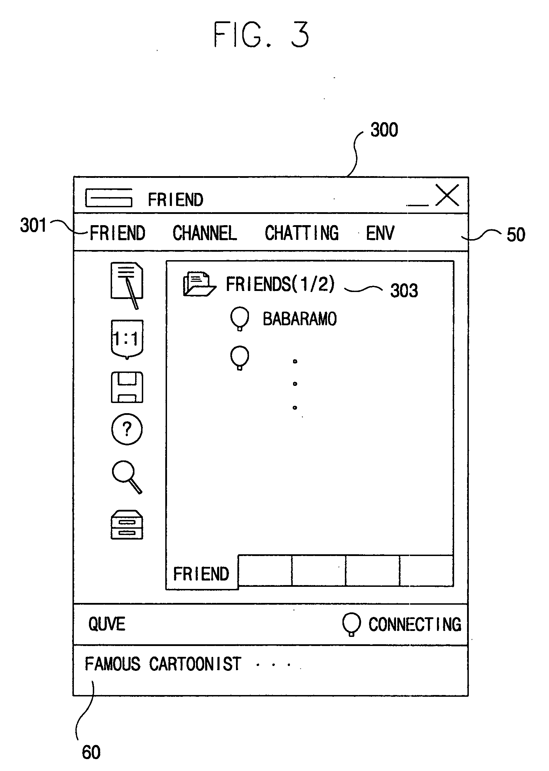

Another instant messenger window 300 of FIG. 3 is pop up in a predetermined region of the player computer 10 when the ID and password inputted by players is correct. The instant messenger window 300 of FIG. 3 is also pop up when a chatting program is executed, and includes a friends list 303 registered by a player.

Hereinafter, an explanation about general functions of a conventional chatting program, such as transferring messages, retrieval of a personal information, and publication of the personal information, is not shown because the instant messenger driving program of the present invention includes all functions of the conventional chatting program. The main server 42 performs the function of transferring messages to both a login player's computer and opponent players' computers by a request for chatting from the login player. The lobby server 43 manages a list of members who belong to chatting groups or participate in chatting groups.

The instant messenger server 40 comprises the database server 44 which saves members information and content information, the database server 44 supports functions provided by the present invention as well as functions provided by the general chatting program.

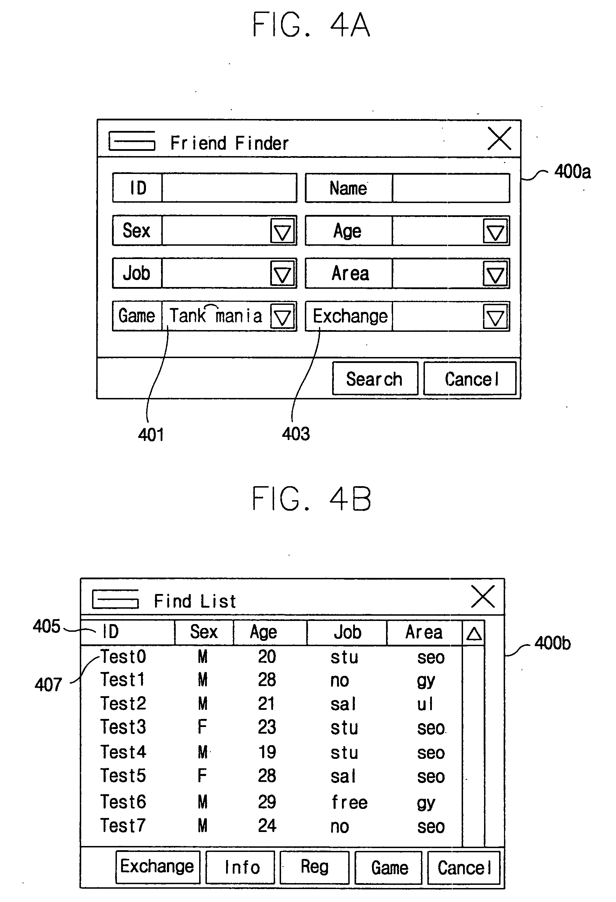

When the instant messenger driving program is running, the instant messenger window 300 as shown in FIG. 3 is pop up on a displaying mean of the player computer 10. A friend menu 301 of a menu 50 in the instant messenger window 300 includes a menu to search for opponent players, a window 400a of FIG. 4A is pop up when the player clicks the menu to search for opponent player. Then, the player selects a sex, an age, an area, a job, and a game of the opponent player to play the on-line game with. The retrieval-supporting module 44a first searches member information saved in the member database 44e for the opponent player when searching for the opponent player corresponding to a retrieval condition inputted by the player. Further, the retrieval-supporting module 44a is also able to search for the opponent player among players registered as a member in the game-content server 20.

A database (not shown) which saves member information of each game-content server 20 can be shared database so that the database is accessible when the retrieval-supporting module 44a in the instant messenger server 40 searches for the opponent player according to the retrieval condition.

Referring to FIG. 4A, the player is searching for an opponent player to play a tankmania 401 game with, and as shown in FIG. 4B, players having IDs, such as test0, test1, ... are displayed. Player information further includes the name of favorite game and the name of game that a player can play in order to support to search for the opponent player by above procedure, when the player registers as a member. Accordingly, the player is able to search for the opponent player by using the game name when the player searches for the opponent player to play the on-line game with.

Namely, the player is able to search the opponent player by inputting a sex, an age, an area, and a job of the opponent player, or the player is able to search the opponent player by using only the name of the game regardless of condition of the opponent player.

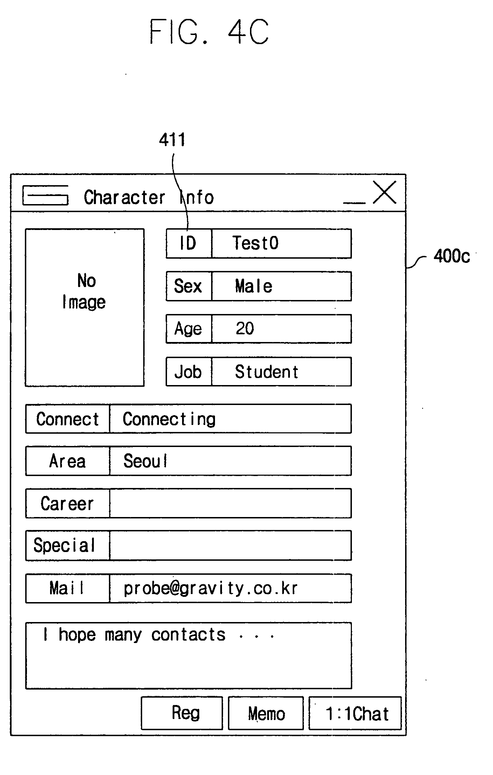

As shown in a window 400c of FIG. 4C, the player is able to get a detailed information of the opponent player when the player executes double-click for a specific displayed ID in order to see a detailed information of each opponent players of a plurality of searched opponent players. FIG. 4C shows detailed information of the opponent player with an ID, test0 407 among a plurality of searched opponent players.

The retrieval-supporting module 44a transmits a message, such as a message 421 in FIG. 4D, when the player selects one opponent player to play the on-line game with after viewing the detailed information of each opponent player in FIG. 4B.

The selected opponent player is able to receive the message 421 of FIG. 4D from the instant messenger server 40 only when the selected player is in a state of login in the instant messenger server 40.

The opponent player, who received a window 400d having message 421 of FIG. 4D, with the ID "test0" expresses an opinion whether the opponent player wants to play a game suggested by the player together by clicking an approve button 423 or a reject button 425 of the window 400d.

The content-executing support module 44b judges whether the program of the on-line game to play is installed on the computer 10 of the player or the opponent player when the opponent player clicks the approve button 423.

The content-executing support module 44b judges whether a tankmania game program is installed on the computer 10 of the player or the opponent player because the player proposed to play the tankmania as shown in FIG. 4A. The content-executing support module 44b downloads the tankmania game program from the content database 44f to the computer 10 of the player of the opponent player when the tankmania game program is not installed on the computer 10 of the player or the opponent player.

On-line game contents, which is provided by a plurality of game-content server 20, is saved in the content database 44f, and the on-line game contents saved in the content database 44f is downloaded to the player computer 10. The on-line game contents include a free content which players does not have to pay in order to use the on-line game contents, or a pay-content which players have to pay a predetermined money in order to use the on-line game contents.

First, it is assumed that the tankmania game program is a free content in order to explain the case where the game, which the player wants to play with the opponent player, is free content.

When the opponent player clicks the approve button 423, the content-executing support module 44b downloads and installs automatically the program to run the tankmania game to the computer 10 of the player or the opponent player as shown FIG. 4E. Then, the content-executing support module 44b connects the computer 10 of the player or the opponent player to a corresponding server (i.e. a server which provide the tankmania game) so that the player or the opponent player is able to start the game instantly.

The free content may be a content that is provided by free in order to advertise the content during a free service period before converting the free content to pay-content.

However, when the tankmania program is not free, first, a pay-content payment support module(not shown) transmits a message 431 of FIG. 4F, which shows the program is not free, to the computer 10 of the player (or the opponent player).

As shown in FIG. 4F, the message 431 includes the money that a player, who wants to execute the pay-content program, has to pay.

When the player (or the opponent player) clicks a Yes button 435 in order to pay the money and to execute the game, a message 441, which shows that it will be connected to a page to execute a on-line payment service, is provided to the computer 10 of the player (or the opponent player).

The pay-content payment support module support for the player to pay the money by cyber money when the player has cyber money, or to pay by credit card, and cash transfer etc. The cyber money is a kind of virtual money that can be used to buy contents, goods, etc. on the Internet.

Nowadays, PG (Payment Gateway) companies appear, and credit card business enterprises recommend paying via the PG companies. The PG company provides payment intervene services in which the PG company securely manages and relays payments occurring from electronic transaction between customers and sellers in on-line shopping mall to financial institute such as credit card companies, banks, etc. When a operator of the instant messenger server 40 certificates and approves accounts and credit cards by cooperating with a specific PG company, the operator of the instant messenger server 40 provides cyber money that the player requested to buy to the player, and the money is paid through credit card or cash transfer.

Also, there are agencies that charge by adding an information utilization fee to communication service rates in cooperation with communication companies such as ARS (Audio Response System) or mobile phone companies.

The pay-content payment support module allows the player to pay the pay-content fee by selecting a convenient payment means among above various payment means

After the payment for the pay-content fee is finished, windows 400h and 400i in FIG. 4H and 41, respectively, is provided to the computer 10 of the player and the opponent player as to connect the game-content server 20.

If the on-line game is not free, the player and the opponent player are able to play the on-line game together only when both the player and the opponent player complete payment of all the expenses.

The information of players registered as members in the instant messenger server 40 further includes information of in-game items owned by the players, and the database server 44 further includes an in-game item-trading support module 44c for supporting a trade of in-game items.

When the player selects an in-game item to trade at the Exchange 403 of the window 400a in FIG. 4A, the in-game item-trading support module 44c searches the other players who have the in-game items selected by the player for the member database 44e, and provides the retrieval list, which includes the searched players, similar to the retrieval list in FIG. 4B to the computer 10 of the player.

When the player selects at least one player to trade the selected in-game item from the retrieval list, the in-game item-trading support module 44c transmits the message suggesting a trade of the selected in-game item to the selected player.

Then, the selected player, who receives the message suggesting a trade of the selected in-game item, transmits a trade condition to the player who transmitted the message suggesting a trade when the selected player wants to trade.

The player receives at least one trade conditions from the selected player, and at last selects the player suggesting a trade condition corresponding to the trade condition made by the player.

Then, an in-game item trade is completed between the player and the finally selected player, and the in-game item trade is made through the instant messenger server 40. The in-game item trade includes an exchange of in-game item, a sale of in-game item, and a purchase of in-game item, etc.

An event advertisement region 60 is located in a predetermined region of a window 300 in the instant messenger executed in the player computer 10 in order to advertise specific information, and various information is displayed in the event advertisement region 60.

The database server 44 further includes an event-managing module 44d. The event-managing module 44d receives event information from the gift-content server 30, saves the event information in the content database 44f, and displays the event information in the event advertisement region 60 of the window 300 in the instant messenger in a predetermined period.

The event information includes information of a gift event through a quiz, and information of a gift event through a questionnaire.

When the player clicks the event advertisement region 60 of the window 300 in the instant messenger, a window including the event is shown. The window includes a quiz or a questionnaire, etc.

When players solve the quiz or responses to the questionnaire, the gift-content server 30 presents the gift among a plurality of participant by lot. The operator of the gift-content server 30 is able to acquire outstanding advertisement effects through the event advertisement region 60, and accordingly, the operator of the instant messenger server 40 is able to acquire a commission.

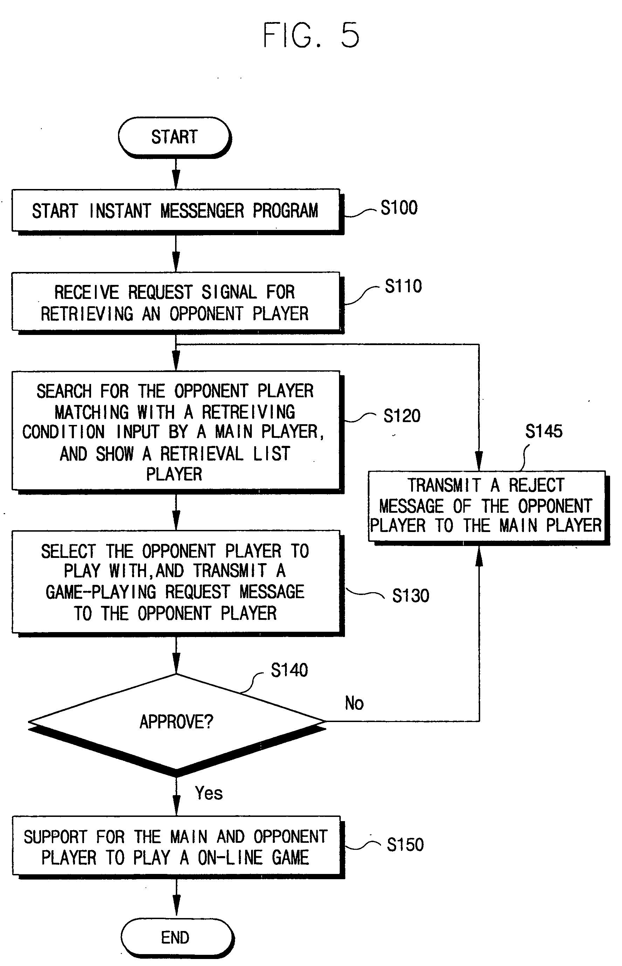

FIG. 5 is a flow chart illustrating a method for supporting the on-line game in accordance with one embodiment of the present invention. Referring to FIG. 5, hereinafter, the process for supporting the on-line game in the instant messenger server 40 is illustrated.

First, the player computer 10 has to be in a state that the instant messenger program is installed therein. A window 300 of the instant messenger is pop up when the instant messenger program is started, and is located in a predetermined region. The window 300 of the instant messenger is shown in FIG. 3.

When a player clicks a menu to search for opponent players, the retrieval-supporting module 44a of the instant messenger server 40 receives a request signal for retrieving the opponent players (S100). The player inputs a retrieval condition for retrieving the opponent players after the player clicks the menu to search for opponent players. The retrieval-supporting module 44a of the instant messenger server 40 searches the member database 44e for members corresponding to the retrieval condition inputted by the player, and provides a list representing the result of retrieval to the player computer 10 (S120).

When the player selects the opponent player to play with among the list, the retrieval-supporting module 44a transmits a game-playing request message to the selected opponent player (S130). The game-playing request message is shown in FIG. 4D as a preferred embodiment.

When the opponent player approves to play the game together after receiving the game-playing request message (S140), the content-executing support module 44b supports for both of the player and the opponent player to play the on-line game together. (S 150) However, when the opponent player rejects, the content-executing support module 44b transmits a reject message that informs the player of the opponent player's rejection to play the game together (S145), and the player retrieves other opponent players again.

A program of the on-line game suggested by the player has to be installed in the computer of the player and the opponent player even when the opponent player approves to play the game together. The process of judging whether the on-line game program is installed in the player computer 10 and the process of downloading the on-line game program when the program is not installed is illustrated above already, and will not be illustrated here.

While the present invention has been described in detail, it should be understood that various changes, substitutions and alterations can be made hereto without departing from the spirit and scope of the invention as defined by the appended claims.

## Claims

1. An instant messenger server for supporting on-line games, when an instant messenger program is loaded on a player's computer and the instant messenger program is executed, the instant messenger server supports for transferring messages between a player and an opponent player by a request from the main player logged in, wherein the instant messenger server:
includes at least one on-line game content; and
supports for the on-line game to be executed automatically, and for the main player logged in to play the on-line game with the opponent player when the main player logged in retrieves opponent players to play with the on-line game, proposes opponent player matching with retrieved condition to play the on-line game, and receives an approval signal from the opponent player.

2. An instant messenger server of claim 1, wherein the instant messenger server support for the main player to exchange an in-game item acquired from the on-line game with the other players.

3. An instant messenger server of claim 1 or 2, wherein the instant messenger server comprising:
a login server for verifying whether a main player trying to login is a member;
a database server, which includes member information and content information, for supporting for the on-line game to be executed;
a main server for transferring messages between a computer of the main player logged in and the opponent player's computer by a request for chat from the main player logged in; and
a lobby server for managing a list of members being in chat groups and participating in the chat groups.

4. An instant messenger server of claim 3, wherein the database server comprising:
a member database for including a player information registered as a member;
a content database for including at least one game content;
a retrieval-supporting module for searching the member database for an opponent player matching with the retrieval condition and showing the searched opponent player to the main player when the main player inputs the retrieval condition for the opponent player to play with; and
a content-executing support module for judging whether the on-line game program is installed in the main player's computer and the opponent player's computer when a game-play control signal is received, and, if the on-line game program is not installed, for automatically searching the content database for a corresponding game program and downloading the on-line game program into the main player's or the opponent player's computer.

5. An instant messenger server of claim 4, wherein the instant messenger server storing an information including the acquired in-game item and the result of game into the member database when the on-line game is come to an end between the main player and the opponent player.

6. An instant messenger server of claim 4, wherein the player information included in the member database further comprising an information about an in-game item owned by the players; and the database server further comprising an in-game item-trading supporting module for intermediating the trade of in-game item.

7. An instant messenger server of claim 6, wherein the in-game item-trading supporting module
transmitting a message suggesting a trade of the in-game item to at least one opponent player selected by the main player when a main player retrieves and selects the opponent player in order to trade the in-game item, transmitting a trade condition to the opponent player when the opponent player wants to continue trading, and support for trading of in-game item between the main player and the opponent player when the main player selects the opponent player corresponding to the trade condition.

8. An instant messenger server of claim 4, wherein the retrieval-supporting module providing the opponent player with a message window requesting for a game when the main player select a game name and the opponent player to play with among the opponent players matching the retrieval condition, the message window including a reject or approval button by which the opponent player is able to reject or approve the request for a game.

9. An instant messenger server of claim 8, wherein content-executing support module further comprising a pay-content payment support module, the pay-content payment supports module providing a pay-content information showing that the game content should be paid when the on-line game which the main player and the opponent player want to play is the pay-content and the opponent player clicks the approval button, and requests the main player or the opponent player for the payment

10. An instant messenger server of claim 9, wherein the pay-content payment supports module supports for the main player to pay with a cyber money when the main player to utilize a pay-content has the cyber money.

11. An instant messenger server of claim 4, wherein the database server receives a event content from at least one gift-content server and storing the event content into the content database, and the database server further comprises an event-managing module for supporting for the main player to be provided with a gift by a lottery when the main player participates in an event of the event advertisement region included in a predetermined region of the instant messenger.

12. An instant messenger server of claim 11, wherein the event is a gift event through a quiz, and a gift event through a questionnaire.

13. An on-line game supporting method for supporting a main player, who connects an on-line game server and requests for the on-line game, to play the requested on-line game, the on-line game supporting method comprising the steps of:
1) retrieving an opponent player matching with a retrieval condition and providing retrieval result to the main player when the main player inputs the retrieval condition for the opponent player to play with; and
2) transmitting a game-playing request signal to the opponent player matching with the retrieved condition, and supporting the main player and the opponent player to play the on-line game together when receiving an approval signal from the opponent player.

14. An on-line game supporting method of claim 13, the method further comprises the step of 3) supporting for a trade of an in-game item possessed by the main player.

15. An on-line game supporting method of claim 13, wherein the step 1) includes the steps of 1-1) verifying whether a player trying to login is a member, and 1-2) being input the retrieval condition for retrieving the opponent player to play with the on-line game from the verified player, and providing a retrieved result, which is a result of searching the member database for an opponent player matching with the retrieval condition, to the player computer.

16. An on-line game supporting method according to any one of claims 13-15, wherein the step 2) includes the steps of 2-1) transmitting a game-playing request signal to a selected opponent player when the main player selects one of the retrieved result, 2-2) judging whether an on-line game program is installed in the main player's computer and the opponent player's computer when an approval signal for the game-playing request signal is received, and 2-3) after the judgment of step 2-2), if the on-line game program is not installed, automatically searching a content database for a corresponding on-line game program and downloading the on-line game program into the main player's or the opponent player's computer.

17. An on-line game supporting method of claim 16, wherein the step 2) includes the step of 2-4) storing an information including the acquired in-game item and the result of the on-line game into the member database when the on-line game is come to an end between the main player and the opponent player.

18. An on-line game supporting method of claim 16, wherein a player information stored in the member database further comprising an information about an in-game item possessed by the main player, and the step 3) includes the steps of 3-1) transmitting a message suggesting a trade of the in-game item to at least one opponent player selected by a main player, 3-2) transmitting a trade condition to the opponent player when the opponent player who received the message wants to continue trading, and 3-3) supporting for trading of in-game item between the main player and the opponent player when the main player finally selects the opponent player corresponding to the trade condition.

19. An on-line game supporting method of claim 16, wherein the step 1-2) includes the step of 1-2a) providing the opponent player selected by the main player with a message window requesting for a game, the message window including a reject or approval button by which the opponent player is able to reject or approve the request for a game.

20. An on-line game supporting method of claim 19, wherein the step 2-3) includes the step of 2-3a) providing a pay-content information showing that the game content should be paid when the on-line game which the main player and the opponent player want to play is the pay-content, and 2-3b) requesting the main player or the opponent player for the payment

21. An on-line game supporting method of claim 20, wherein the step 2-3b) supports for a main player to pay with a cyber money when the main player to utilize the pay-content has the cyber money.

22. An on-line game supporting method of claim 13, wherein the on-line game supporting method further comprising the step of 4) supporting for the main player to be provided with a gift by a lottery when the main player participates in an event of the event advertisement region included in a predetermined region of the instant messenger, the event advertisement is provided from the content database which receives a event content from at least one gift-content server and stores the event content-therein.

23. An on-line game supporting method of claim 13, wherein the event is a gift event through a quiz, and a gift event through a questionnaire.

24. A recorded medium saving a program for supporting an on-line game through an instant messenger, the program supports a main player, who connects an on-line game server and requests for the on-line game, to play the requested on-line game, and the program executing the steps of:
A) retrieving an opponent player matching with a retrieval condition and providing retrieval result to the main player when the main player inputs the retrieval condition for the opponent player to play with; and
B) transmitting a game-playing request signal to the opponent player matching with the retrieved condition, and supporting the main player and the opponent player to play the on-line game together when receiving an approval signal from the opponent player.

25. A recorded medium saving a program for supporting an on-line game through an instant messenger of claim 24, the program further comprises the step of c) supporting for a trade of an in-game item possessed by the main player.

26. A recorded medium saving a program for supporting an on-line game through an instant messenger of claim 24, wherein the step A) includes the steps of A-1) verifying whether a main player trying to login is a member, and A-2) being input the retrieval condition for retrieving the opponent player to play with the on-line game from the verified player, and providing a retrieved result, which is a result of searching the member database for an opponent player matching with the retrieval condition, to the player computer.

27. A recorded medium saving a program for supporting an on-line game through an instant messenger according to any one of claims 24-26, wherein the step B) includes the steps of B-1) transmitting a game-playing request signal to a selected opponent player when the main player selects one of the retrieved result, B-2) judging whether an on-line game program is installed in the main players computer and the opponent player's computer when an approval signal for the game-playing request signal is received, and B-3) after the judgment of step B-2), if the on-line game program is not installed, automatically searching a content database for a corresponding on-line game program and downloading the on-line game program into the main player's or the opponent player's computer.

28. A recorded medium saving a program for supporting an on-line game through an instant messenger of claim 27, wherein the step B) includes the steps of B-4) storing an information including the acquired in-game item and the result of the on-line game into the member database when the on-line game is come to an end between the main player and the opponent player.

29. A recorded medium saving a program for supporting an on-line game through an instant messenger of claim 25, wherein a player information stored in the member database further comprising an information about an in-game item possessed by the main player, and the step C) includes the steps of C-1) transmitting a message suggesting a trade of the in-game item to at least one opponent player selected by a main player, C-2) transmitting a trade condition to the opponent player when the opponent player who received the message wants to continue trading, and C-3) supporting for trading of in-game item between the main player and the opponent player when the main player finally selects the opponent player corresponding to the trade condition.

30. A recorded medium saving a program for supporting an on-line game through an instant messenger of claim 27, wherein the step A-2) includes the steps of A-2a) providing the opponent player selected by the main player with a message window requesting for a game, the message window including a reject or approval button by which the opponent player is able to reject or approve the request for a game.

31. A recorded medium saving a program for supporting an on-line game through an instant messenger of claim 30, wherein the step B-3) includes the steps of B-3a) providing a pay-content information showing that the game content should be paid when the on-line game which the main player and the opponent player want to play is the pay-content, and B-3b) requesting the main player or the opponent player for the payment.

32. A recorded medium saving a program for supporting an on-line game through an instant messenger of claim 31, wherein the step B) supports for a main player to pay with a cyber money when the main player to utilize the pay-content has the cyber money.

33. A recorded medium saving a program for supporting an on-line game through an instant messenger of claim 24, wherein the program further comprises the step of D) supporting for the main player to be provided with a gift by a lottery when the main player participates in an event of the event advertisement region included in a predetermined region of the instant messenger, the event advertisement is provided from the content database which receives a event content from at least one gift-content server and stores the event content therein.

34. A recorded medium saving a program for supporting an on-line game through an instant messenger of claim 33, wherein the event is a gift event through a quiz, and a gift event through a questionnaire.
